# FASCICULE DE BREVET EUROPEEN

(11) **EP 1 874 973 B1**
(45) Date de publication et mention de la délivrance du brevet: **28.12.2011**
(21) Numéro de dépôt: 06743718.6
(22) Date de dépôt: 20.04.2006
(51) Int. Cl.: C22C 38/52, C22C 38/44, C22C 38/06, C21D 6/00, C21D 6/04

(54) **ACIER MARTENSITIQUE DURCI, PROCEDE DE FABRICATION D'UNE PIECE A PARTIR DE CET ACIER, ET PIECE AINSI OBTENUE**
ANGELASSENER MARTENSITISCHER STAHL, VERFAHREN ZUR HERSTELLUNG EINES TEILS AUS DEM STAHL UND SO ERHALTENES TEIL
TEMPERED MARTENSITIC STEEL, METHOD OF PRODUCING A PART FROM SAID STEEL AND PART THUS OBTAINED

(30) Priorité: 27.04.2005 FR 0504254; 12.07.2005 FR 0507482
(43) Date de publication de la demande: 09.01.2008
(73) Titulaire: AUBERT & DUVAL, 75015 Paris (FR); Snecma, 75015 Paris (FR)
(72) Inventeur: MONTAGNON, Jacques, F-63000 Clermont-Ferrand (FR); HERITIER, Philippe, F-63100 Clermont-Ferrand (FR); PESLERBE, Isabelle, F-91340 Ollainville (FR); MONS, Claude, F-77176 Savigny Le Temple (FR)
(74) Mandataire: Jacobson, Claude
(86) Numéro de dépôt international: PCT/FR2006/000877
(87) Numéro de publication internationale: WO 2006/114499

(56) Documents cités:
- EP-A- 0 390 468
- EP-A- 0 962 543
- EP-A- 1 111 080
- WO-A-01/14601
- GB-A- 1 089 934
- GB-A- 1 243 382
- US-A- 5 393 488
- US-A- 5 873 956
- US-A1- 2003 094 218
- PATENT ABSTRACTS OF JAPAN vol. 2002, no. 10, 10 octobre 2002 (2002-10-10) & JP 2002 161342 A (DAIDO STEEL CO LTD), 4 juin 2002 (2002-06-04)
- PATENT ABSTRACTS OF JAPAN vol. 2002, no. 10, 10 octobre 2002 (2002-10-10) & JP 2002 161308 A (DAIDO STEEL CO LTD), 4 juin 2002 (2002-06-04)
- PATENT ABSTRACTS OF JAPAN vol. 2002, no. 10, 10 octobre 2002 (2002-10-10) & JP 2002 167652 A (DAIDO STEEL CO LTD), 11 juin 2002 (2002-06-11)

## Description

L'invention concerne un acier martensitique durci par un système duplex, c'est-à-dire par une précipitation de composés intermétalliques et de carbures obtenue grâce à une composition de l'acier et un traitement thermique de vieillissement appropriés.

Cet acier doit avoir :
- une très haute résistance mécanique, mais en même temps une ténacité et une ductilité élevées, autrement dit une faible sensibilité à la rupture fragile ; cette très haute résistance doit subsister à chaud, c'est-à-dire à des températures de l'ordre de 400°C ;
- de bonnes propriétés en fatigue, ce qui implique notamment l'absence d'inclusions nocives telles que des TiN et des oxydes ; cette caractéristique doit être obtenue par une composition appropriée et des conditions d'élaboration du métal liquide soignées.

De plus, il doit être cémentable et nitrurable, de manière à pouvoir durcir sa surface pour lui conférer une bonne résistance à l'abrasion.

La principale application envisagée pour cet acier est la fabrication d'arbres de transmission, notamment pour moteurs d'avions.

La nécessité d'une excellente résistance mécanique à chaud empêche d'utiliser, dans cette application, des aciers au carbone dont la résistance se dégrade à partir de 200°C. On utilise habituellement des aciers maraging qui ont une résistance satisfaisante jusqu'à 350-400°C. Au dessus, il se produit un revenu qui modifie leur structure.

Il a été proposé dans le document US-A-5,393,488 une composition d'acier visant à améliorer la tenue à chaud et surtout à améliorer les propriétés en fatigue, la ductilité et la ténacité. Cette composition a l'inconvénient d'exiger une teneur en Co élevée (8 à 16%), ce qui rend l'acier très coûteux.

Le but de l'invention est de proposer un acier utilisable, notamment, pour fabriquer des pièces mécaniques telles que des arbres de transmission, ou des éléments de structure, présentant une résistance mécanique à chaud encore améliorée mais aussi des propriétés en fatigue et une fragilité toujours adaptées à ces usages. Cet acier devrait également avoir un coût d'élaboration plus faible que les aciers les plus performants connus actuellement pour ces usages.

A cet effet, l'invention a pour objet un acier caractérisé en ce que sa composition est, en pourcentages pondéraux :
- C = 0,18 - 0,30%
- Co=5-7%
- Cr=2-5%
- Al= 1 - 2%
- Mo+W/2=1-4%
- V = traces - 0,3%
- Nb = traces - 0,1 %
- B = traces - 50 ppm
- Ni = 10,5 - 15% avec Ni ≥ 7 +3,5 Al
- Si = traces - 0,4%
- Mn = traces - 0,4%
- Ca = traces - 500 ppm
- Terres rares = traces - 500 ppm
- Ti = traces - 500 ppm
- O = traces - 200ppm si l'acier est obtenu par métallurgie des poudres, ou traces - 50 ppm si l'acier est obtenu par élaboration à l'air ou sous vide à partir de métal liquide
- N = traces -100 ppm
- S = traces - 50 ppm
- Cu = traces -1 %
- P = traces - 200 ppm
le reste étant du fer et des impuretés inévitables résultant de l'élaboration.

De préférence il contient C = 0,20 - 0,25%.

De préférence il contient Cr = 2 - 4%.

De préférence il contient Al = 1 -1,6%, mieux 1,4 -1,6%.

De préférence il contient Mo ≥ 1 %

De préférence il contient Mo + W/2 = 1 - 2%.

De préférence il contient V = 0,2 - 0,3%.

De préférence il contient Nb = traces - 0,05%.

De préférence il contient Si = traces - 0,25%, mieux traces - 0,10%.

De préférence il contient Mn = traces - 0,25%, mieux traces 0,10%.

De préférence il contient Ti = traces -100 ppm.

De préférence il contient O = traces -10 ppm.

De préférence il contient N = traces - 50 ppm, mieux traces -10 ppm.

De préférence il contient S = traces - 10 ppm, mieux traces - 5 ppm.

De préférence il contient P = traces - 100 ppm.

De préférence sa température de transformation martensitique Ms est supérieure ou égale à 140°C, avec Ms = 550 - 350 x C% - 40 x Mn% - 17 x Cr% -10 x Mo% - 17 x Ni% - 8 x W% - 35 x V% - 10 x Cu% - 10 x Co% + 30 x Al% °C.

L'invention a également pour objet un procédé de fabrication d'une pièce en acier, caractérisé en ce qu'il comporte les étapes suivantes avant le parachèvement de la pièce lui procurant sa forme définitive :
- la préparation d'un acier ayant la composition précédente ;
- le forgeage de cet acier ;
- un revenu d'adoucissement à 600-675°C pendant 4 à 20h suivi d'un refroidissement à l'air ;
- une mise en solution à 900-1000°C pendant au moins 1 h, suivie par un refroidissement à l'huile ou à l'air suffisamment rapide pour éviter la précipitation de carbures intergranulaires dans la matrice d'austénite ;
- optionnellement un traitement cryogénique à -50°C ou plus bas, de préférence à -80°C ou plus bas, pour transformer toute l'austénite en martensite, la température étant inférieure de 200°C ou davantage à Ms, au moins un desdits traitements durant au moins 2h ;
- optionnellement un traitement d'adoucissement de la martensite brute de trempe effectué à 150-250°C pendant 4-16h, suivi par un refroidissement à l'air calme ;
- un vieillissement de durcissement à 475-600°C, de préférence de 490-525°C pendant 5-20h.

La pièce peut également subir une nitruration ou une cémentation.

L'invention a également pour objet une pièce mécanique ou pièce pour élément de structure, caractérisée en ce qu'elle est fabriquée selon le procédé précédent.

Il peut s'agir d'un arbre de transmission de moteur, d'un dispositif de suspension de moteur, d'un élément d'atterrisseur...

Comme on l'aura compris, l'invention repose d'abord sur une composition d'acier qui se distingue de l'art antérieur notamment par une teneur en Co plus réduite. Les teneurs des autres éléments d'alliage sont ajustées en conséquence, notamment les teneurs en Al, Mo, W, Ni. Un traitement thermique optimisé est également proposé.

Ces aciers ont un écart plastique (écart entre résistance à la rupture Rₘ et résistance à l'allongement R_{p0,2}) intermédiaire entre ceux des aciers au carbone et des maragings. Pour ces derniers, l'écart est très faible, procurant une limite élastique élevée, mais une rupture rapide dès qu'elle est franchie. Les aciers de l'invention ont, de ce point de vue, des propriétés ajustables par la proportion des phases durcissantes et/ou du carbone.

L'acier de l'invention peut être usiné à l'état trempé, avec des outils adaptés à une dureté de 45HRC. Il est intermédiaire entre les maragings (usinables bruts de trempe puisqu'ils ont une martensite douce à bas carbone) et les aciers au carbone qui doivent être usinés à l'état recuit.

L'invention repose sur l'obtention d'un durcissement réalisé conjointement par des intermétalliques de type p-NiAl et par des carbures de type M₂C, et sur la présence d'austénite de réversion formée lors du vieillissement de durcissement, qui donne de la ductilité à la martensite par formation d'une structure sandwich (quelques % d'austénite de réversion entre les lattes de martensite).

Il faut éviter de former des nitrures, de Ti et d'Al notamment, qui sont fragilisants : on élimine donc toute addition de Ti (maximum autorisé : 500ppm, mieux encore 100ppm), et on limite N autant que possible, en le fixant pour éviter la formation de AIN.

Les carbures M₂C de Cr, Mo, W et V contenant très peu de Fe sont privilégiés pour leurs propriétés durcissantes et non fragilisantes. Ils sont stabilisés par Mo et W. La somme de la teneur en Mo et de la moitié de la teneur en W doit être d'au moins 1%. Il ne faut pas dépasser Mo + W/2 = 4% pour ne pas détériorer la forgeabilité et ne pas former des intermétalliques de la phase µ de type Fe₇Mo₆ (voir aussi Cr et V). De préférence, Mo + W/2 est compris entre 1 et 2%.

Cr et V sont des précurseurs à la stabilisation des M₂C qui sont des carbures « métastables ». V forme des carbures qui « bloquent » les joints de grains et limitent le grossissement des grains lors des traitements thermiques à haute température. Il ne faut pas dépasser V = 0,3% pour ne pas favoriser la formation d'intermétalliques indésirables de phase µ. De préférence la teneur en V est comprise entre 0,2 et 0,3%.

La présence de Cr (au moins 2%) permet de diminuer le taux de carbures de V et d'accroître le taux de M₂C. Il ne faut pas dépasser 5% pour ne pas former de phase µ, puis de carbures M₂₃C₆. De préférence on ne dépasse pas 4%.

La présence de C favorise l'apparition de M₂C par rapport à la phase µ. Mais une teneur excessive cause des ségrégations et un abaissement de Ms. Sa teneur doit être comprise entre 0,18 et 0,30%, de préférence 0,20-0,25%.

Co retarde la restauration des dislocations et, donc, ralentit les mécanismes de survieillissement à chaud dans la martensite. Il permet ainsi de conserver une résistance à chaud élevée. Mais on soupçonne que, comme le Co favorise la formation de la phase µ précitée qui est celle qui durcit les aciers maraging de l'art antérieur au Fe-Ni-Co-Mo, sa présence massive contribue à diminuer la quantité de Mo et/ou de W disponible pour former des carbures M₂C qui contribuent au durcissement selon le mécanisme que l'on veut favoriser. La teneur en Co proposée (5 à 7%), en combinaison avec les teneurs des autres éléments, résulte d'un compromis entre ces divers avantages et inconvénients.

Ni et Al sont liés. Si Al est trop élevé par rapport à Ni, on n'a plus de potentiel d'austénite de réversion. Si on a trop de Ni, on réduit trop le taux de phase durcissante type NiAl, et Al reste largement en solution. En fin de trempe, il ne faut pas avoir d'austénite résiduelle, et il faut se retrouver avec une structure martensitique. A cet effet, si on utilise une trempe au CO₂ solide, il faut avoir Ms ≥ 140°C. Ms est calculée selon la formule classique : Ms = 550 - 350 x C% - 40 x Mn% - 17 x Cr% - 10 x Mo% - 17 x Ni% - 8 x W% - 35 x V% - 10 x Cu% - 10 x Co% + 30 x Al% °C. La teneur en Ni doit être ajustée à cet effet en fonction des autres éléments. On doit avoir Al = 1-2%, de préférence 1-1,6%, mieux 1,4-1,6%, et Ni = 10,5-15%, avec Ni ≥ 7 + 3,5 Al. Idéalement on a 1,5% d'Al et 12-13% de Ni. Ces conditions favorisent la présence de NiAl ce qui augmente la résistance à la traction Rₘ, dont on constate également qu'elle n'est pas détériorée par la teneur en Co relativement basse. La limite élastique R_{p0,2} est influencée de la même façon que Rₘ.

Par rapport aux aciers connus de US-A-5 393 388, où on recherche une présence très élevée d'austénite de réversion pour avoir une ductilité et une ténacité élevée, l'invention privilégie la présence des phases durcissantes B2, notamment NiAl, pour obtenir une résistance mécanique élevée à chaud. Le respect des conditions sur Ni et Al qui ont été données assure une teneur potentielle suffisante d'austénite de réversion pour conserver une ductilité et une ténacité convenables pour les applications envisagées.

Il est possible d'ajouter B, mais pas plus de 50ppm pour ne pas dégrader la forgeabilité de l'acier.

Une caractéristique de l'invention est aussi la possibilité de remplacer au moins une partie de Mo par W. A fraction atomique équivalente, W ségrège moins à la solidification que Mo et apporte de la tenue mécanique à chaud par la formation de carbures très stables en température. Il a l'inconvénient d'être coûteux et on peut optimiser ce coût en l'associant à Mo. Comme on l'a dit, Mo + W/2 doit être compris entre 1 et 4%, de préférence entre 1 et 2%. On préfère conserver une teneur minimale en Mo de 1 % pour limiter le coût de l'acier.

N peut aller jusqu'à 100ppm si on effectue l'élaboration à l'air et si on fixe N dans des carbonitrures de Nb et/ou de V pour éviter de former le nitrure fragilisant AIN. Il est préférable d'effectuer l'élaboration sous vide de manière à avoir N ≤ 50ppm, voire ≤ 10ppm.

Cu peut aller jusqu'à 1 %. Il est susceptible de participer au durcissement à l'aide de sa phase epsilon, et la présence de Ni permet de limiter ses effets nocifs.

De manière générale, les éléments pouvant ségréger aux joints de grains et les fragiliser, comme P et S, doivent être contrôlés dans les limites suivantes : S = traces - 50ppm, de préférence traces -10ppm, mieux traces - 5ppm, et P = traces - 200ppm, de préférence traces -100ppm.

On peut utiliser Ca comme désoxydant, en le retrouvant résiduellement au final (≤ 500ppm). De même, des résidus de terres rares peuvent subsister au final (≤ 500ppm) à la suite d'un traitement d'affinage du métal liquide.

La teneur en oxygène acceptable varie selon que l'acier a été obtenu par métallurgie des poudres ou par une élaboration à partir de métal liquide à l'air ou sous vide. Dans le premier cas, on tolère une teneur pouvant aller jusqu'à 200 ppm. Dans le deuxième cas, la teneur maximale est de 50 ppm, de préférence 10 ppm.

A titre d'exemples, on a testé des échantillons d'acier dont les compositions (en pourcentages pondéraux) sont reportées dans le tableau 1 :

**Tableau 1 : Composition des échantillons testés**

| | **A (référence)** | **B (référence)** | **C (invention)** | **D (invention)** | **E (invention)** |
|---|---|---|---|---|---|
| **C%** | 0,233 | 0,247 | 0,239 | 0,244 | 0,247 |
| **Si%** | 0,082 | 0,031 | 0,031 | 0,037 | 0,030 |
| **Mn%** | 0,026 | 0,030 | 0 ,033 | 0,033 | 0,030 |
| **S ppm** | 1,0 | 7,3 | 3,8 | 6,1 | 6,7 |
| **P ppm** | 54 | <30 | <30 | <30 | <30 |
| **Ni%** | 13,43 | 13,31 | 12,67 | 12,71 | 13,08 |
| **Cr%** | 2,76 | 3,08 | 3,38 | 3,38 | 3,29 |
| **Mo%** | 1,44 | 1,53 | 1,52 | 1,53 | 1,53 |
| **Al%** | 0,962 | 1,01 | 1,50 | 1,50 | 1,49 |
| **Co%** | 10,25 | 10,35 | 6,18 | 6,24 | 6,33 |
| **Cu%** | 0,014 | <0,010 | 0,011 | 0,012 | 0,011 |
| **Ti%** | <0,020 | <0,020 | <0,020 | <0,020 | <0,020 |
| **Nb%** | <0,0050 | <0,0050 | <0,0050 | <0,0050 | 0,054 |
| **B ppm** | <10 | <5 | <5 | 29 | <5 |
| **Ca ppm** | <50 | <50 | <50 | <50 | <50 |
| **N ppm** | <3 | 13 | 13 | 12 | 14 |
| **O ppm** | <3 | 4,8 | 3,4 | 4,4 | 7,7 |
| **V%** | <0,010 | 0,252 | 0,245 | 0,254 | 0,253 |

L'acier de référence A correspond à un acier selon US-A-5 393 388, ayant donc une teneur en Co élevée.

L'acier de référence B correspond à un acier comparable à l'acier A, auquel on a ajouté du V sans modifier la teneur en Co.

L'acier C correspond à l'invention notamment en ce que, par rapport aux aciers A et B, on a augmenté sa teneur en Al et diminué sa teneur en Co.

L'acier D selon l'invention a subi en plus une addition de B.

L'acier E selon l'invention a subi en plus une addition de Nb.

Ces échantillons ont été forgés à partir de lingots de 200kg en plats de 75 x 35mm dans les conditions suivantes. Un traitement d'homogénéisation d'au moins 16 heures à 1250°C est suivi d'une première opération de forgeage destinée à fractionner les structures grossières des lingots ; des demi-produits de section carrée de 75 x 75 mm ont ensuite été forgés après une remise en température à 1180°C ; finalement, chaque demi-produit a été placé dans un four à 950°C, puis a été forgé à cette température sous la forme de plats de 75 x 35 mm dont la structure granulaire est affinée par ces opérations successives.

Après forgeage les échantillons ont subi :
- une mise en solution à 900°C pendant 1h puis un refroidissement à l'air ;
- un traitement cryogénique à -80°C pendant 8h ;
- un vieillissement de durcissement à 495°C pendant 5h puis un refroidissement à l'air.

Les propriétés des échantillons (résistance à la traction Rₘ, limite élastique Rp0,2, élongation A5d, striction Z, résilience KV, dureté HRC, taille du grain ASTM) sont reportées dans le tableau 2. Elles sont ici mesurées à la température ambiante normale.

**Tableau 2 : Propriétés des échantillons testés**

| | **Rₘ (Mpa)** | **Rp0,2 (Mpa)** | **A5d (%)** | **Z (%)** | **KV (J)** | **HRC** | **Grain ASTM** |
|---|---|---|---|---|---|---|---|
| **A** | 2176 | 1956 | 11,2 | 58 | 25/27 | 55,3 | 8 |
| **B** | 2218 | 2002 | 9,9 | 56 | 26/30 | 56,3 | 8/9 |
| **C** | 2316 | 2135 | 9,5 | 49 | 20/24 | 57,6 | 8 |
| **D** | 2328 | 1997 | 8,9 | 43 | 21/22 | 57,9 | 8 |
| **E** | 2303 | 1959 | 10 | 47 | 16/19 | 57,6 | 9 |

On voit que les échantillons selon l'invention C, D et E présentent une résistance à la traction très supérieure à celle des échantillons de référence A et B. La limite élastique est au moins du même ordre de grandeur. En contrepartie de ce relèvement de la résistance à la traction, les propriétés de ductilité (striction et allongement à la rupture) et de résilience sont abaissées, dans le cas du traitement thermique décrit et appliqué.

L'échantillon de référence B montre que la seule addition de V à l'acier A ne procure qu'une amélioration de certaines propriétés, et dans des proportions le plus souvent moins importantes que dans le cas de l'invention.

En particulier, l'augmentation de l'Al dans le cas de l'invention, conjuguée au maintien d'une teneur en Ni élevée, rend la phase durcissante NiAl plus présente et est un facteur essentiel de l'amélioration de la résistance à la traction.

Les additions de B et Nb des échantillons D et E respectivement ne sont pas nécessaires pour l'obtention des résistances mécaniques élevées visées prioritairement dans l'invention.

Des expériences supplémentaires menées notamment sur l'échantillon C ont permis de déterminer qu'en plus des traitements subis, un revenu d'adoucissement à une température d'au moins 600°C précédant la mise en solution était nécessaire pour obtenir une complète recristallisation de l'acier lors de la mise en solution. Ce revenu d'adoucissement peut, par exemple, être effectué à 650°C pendant 8h et être suivi d'un refroidissement à l'air. Grâce à cela, les produits bruts de transformation thermomécaniques peuvent subir sans encombres les opérations de parachèvement (redressage, écroûtage, usinage...) conférant à la pièce sa forme définitive.

Après ce revenu d'adoucissement à 650°C pendant 8h et refroidissement à l'air, une mise en solution à 935°C pendant 1 heure suivie d'un refroidissement à l'huile, puis un traitement cryogénique à -80°C pendant 8h, puis un détensionnement à 200°C pendant 8h (sur les éprouvettes de traction) ou 16h (sur les éprouvettes de résilience), puis un vieillissement à 500°C pendant 12h suivi d'un refroidissement à l'air, ont permis d'obtenir une taille de gain ASTM de 8 et les propriétés mécaniques suivantes :
- en sens long, à 20°C : Rₘ = 2271 MPa ; Rₚ₀,₂ = 1983 MPa ; A5d = 11,8%; Z = 57% ; KV = 27 J;
- en sens travers à 20°C : Rₘ = 2273 MPa ; R_{p0,2} = 2023 MPa ; A5d = 8,8% ; Z = 41% ; KV = 22 - 24 J;
- en sens long à 400°C : Rₘ = 1833 MPa ; R_{p0,2} = 1643 MPa ; A5d = 11,1%;Z=58%.

En sens long à 20°C, on a donc un excellent compromis entre résistance à la traction, ductilité et résilience. En sens travers, les valeurs de résilience demeurent acceptables. Et à 400°C, la résistance à la traction demeure très élevée, et l'acier de l'invention répond donc très bien aux problèmes posés.

De manière générale, un mode de traitement thermique optimisé de l'acier selon l'invention pour l'obtention au final d'une pièce présentant les propriétés souhaitées est, après le forgeage de l'ébauche de la pièce et avant le parachèvement procurant à la pièce sa forme définitive :
- revenu d'adoucissement à 600-675°C pendant 4 à 20h suivi d'un refroidissement à l'air;
- mise en solution à 900-1000°C pendant au moins 1h, suivie par un refroidissement à l'huile ou à l'air suffisamment rapide pour éviter la précipitation de carbures intergranulaires dans la matrice d'austénite ;
- optionnellement un traitement cryogénique à -50°C ou plus bas, de préférence à -80°C ou plus bas, pour transformer toute l'austénite en martensite, la température étant inférieure de 200°C ou davantage à Ms, au moins un desdits traitements durant au moins 2h ; pour les compositions ayant, notamment, une teneur en Ni relativement basse, ce traitement cryogénique est moins utile ;
- optionnellement un traitement d'adoucissement de la martensite brute de trempe effectué à 150-250°C pendant 4-16h, suivi par un refroidissement l'air calme ;
- vieillissement de durcissement à 475-600°C, de préférence de 490-525°C pendant 5-20h.

Les applications privilégiées de l'acier selon l'invention sont les pièces d'endurance pour mécanique et éléments de structure, pour lesquelles on doit avoir à froid une résistance à la traction comprise entre 2200MPa et 2350MPa, combinée à des valeurs de ductilité et de résilience au moins équivalentes à celles des meilleurs aciers à haute résistance, et à chaud (400°C) une résistance à la traction de l'ordre de 1800MPa, ainsi que des propriétés de fatigue optimales.

L'acier selon l'invention a également pour avantage d'être cémentable et nitrurable. On peut donc conférer aux pièces qui l'utilisent une résistance à l'abrasion élevée. Cela est particulièrement avantageux dans les applications envisagées qui ont été citées.

## Revendications

1. Acier **caractérisé en ce que** sa composition est, en pourcentages pondéraux :
- C = 0,18 - 0,30%
- Co=5-7%
- Cr=2-5%
- Al = 1 -2%
- Mo + W/2 = 1 - 4%
- V = traces - 0,3%
- Nb = traces - 0,1 %
- B = traces - 50 ppm
- Ni = 10,5 - 15% avec Ni > 7 + 3,5 Al
- Si = traces - 0,4%
- Mn = traces - 0,4%
- Ca = traces - 500 ppm
- Terres rares = traces - 500 ppm
- Ti = traces - 500 ppm
- O = traces - 200ppm si l'acier est obtenu par métallurgie des poudres, ou traces - 50 ppm si l'acier est obtenu par élaboration à l'air ou sous vide à partir de métal liquide
- N = traces - 100 ppm
- S = traces - 50 ppm
- Cu = traces -1 %
- P = traces - 200 ppm
le reste étant du fer et des impuretés inévitables résultant de l'élaboration.

2. Acier selon la revendication 1, **caractérisé en ce qu'**il contient C = 0,20 - 0,25%.

3. Acier selon la revendication 1 ou 2, **caractérisé en ce qu'**il contient Cr = 2-4%.

4. Acier selon l'une des revendications 1 à 3, **caractérisé en ce qu'**il contient Al = 1 - 1,6%, de préférence 1,4 -1,6%.

5. Acier selon l'une des revendications 1 à 4, **caractérisé en ce qu'**il contient Mo ≥ 1%.

6. Acier selon l'une des revendications 1 à 5, **caractérisé en ce qu'**il contient Mo + W/2 = 1 - 2%.

7. Acier selon l'une des revendications 1 à 6, **caractérisé en ce qu'**il contient V = 0,2 - 0,3%.

8. Acier selon l'une des revendications 1 à 7, **caractérisé en ce qu'**il contient Nb = traces - 0,05%.

9. Acier selon l'une des revendications 1 à 8, **caractérisé en ce qu'**il contient Si = traces - 0,25%, de préférence traces - 0,10%.

10. Acier selon l'une des revendications 1 à 9, **caractérisé en ce qu'**il contient Mn = traces - 0,25%, de préférence traces 0,10%.

11. Acier selon l'une des revendications 1 à 10, **caractérisé en ce qu'**il contient Ti = traces - 100 ppm.

12. Acier selon l'une des revendications 1 à 11, **caractérisé en ce qu'**il contient O = traces -10 ppm.

13. Acier selon l'une des revendications 1 à 12, **caractérisé en ce qu'**il contient N = traces - 50 ppm, de préférence traces - 10 ppm.

14. Acier selon l'une des revendications 1 à 13, **caractérisé en ce qu'**il contient S = traces - 10 ppm, de préférence traces - 5 ppm.

15. Acier selon l'une des revendications 1 à 14, **caractérisé en ce qu'**il contient P = traces -100 ppm.

16. Acier selon l'une des revendications 1 à 15, **caractérisé en ce que** sa température de transformation martensitique Ms est supérieure ou égale à 140°C, avec Ms = 550 - 350 x C% - 40 x Mn% - 17 x Cr% - 10 x Mo% - 17 x Ni% -8 x W% - 35 x V% - 10 x Cu% - 10 x Co% + 30 x Al % °C.

17. Procédé de fabrication d'une pièce en acier, **caractérisé en ce qu'**il comporte les étapes suivantes avant le parachèvement de la pièce lui procurant sa forme définitive :
- la préparation d'un acier ayant la composition selon l'une des revendications 1 à 16 ;
- le forgeage de cet acier ;
- un revenu d'adoucissement à 600-675°C pendant 4 à 20h suivi d'un refroidissement à l'air ;
- une mise en solution à 900-1000°C pendant au moins 1 h, suivie par un refroidissement à l'huile ou à l'air suffisamment rapide pour éviter la précipitation de carbures intergranulaires dans la matrice d'austénite ;
- un vieillissement de durcissement à 475-600°C, de préférence de 490-525°C pendant 5-20h.

18. Procédé de fabrication d'une pièce en acier suivant la revendication 17, **caractérisé en ce qu'**il comporte en outre un traitement cryogénique à -50°C ou plus bas, de préférence à -80°C ou plus bas, pour transformer toute l'austénite en martensite, la température étant inférieure de 200°C ou davantage à Ms, au moins un desdits traitements durant au moins 2h ;

19. Procédé de fabrication d'une pièce en acier suivant l'une des revendications 17 ou 18, **caractérisé en ce qu'**il comporte en outre un traitement d'adoucissement de la martensite brute de trempe effectué à 150-250°C pendant 4-16h, suivi par un refroidissement l'air calme.

20. Procédé de fabrication d'une pièce d'acier suivant l'une des revendications 17 à 19, **caractérisé en ce que** la pièce subit également une cémentation ou une nitruration.

21. Pièce mécanique ou pièce pour élément de structure, **caractérisée en ce qu'**elle est fabriquée selon le procédé d'une des revendications 17 à 20.

22. Pièce mécanique selon la revendication 21, **caractérisée en ce qu'**il s'agit d'un arbre de transmission de moteur.

## Claims

1. Steel, **characterised in that** the composition thereof is, in percentages by weight:
- C = 0.18 - 0.30%
- Co = 5 - 7%
- Cr = 2 - 5%
- Al = 1 - 2%
- Mo + W/2 = 1 - 4%
- V = trace levels - 0.3%
- Nb = trace levels - 0.1%
- B = trace levels - 50 ppm
- Ni = 10.5 - 15% with Ni ≥ 7 + 3.5 Al
- Si = trace levels - 0.4%
- Mn = trace levels - 0.4%
- Ca = trace levels - 500 ppm
- Rare earth elements = trace levels - 500 ppm
- Ti = trace levels - 500 ppm
- O = trace levels - 200 ppm if the steel is obtained by means of powder metallurgy, or trace levels - 50 ppm if the steel is obtained by means of production in air or under vacuum from liquid metal
- N = trace levels - 100 ppm
- S = trace levels - 50 ppm
- Cu = trace levels - 1%
- P = trace levels - 200 ppm
the remainder being iron and inevitable impurities resulting from the production operation.

2. Steel according to claim 1, **characterised in that** it contains C = 0.20 - 0.25%.

3. Steel according to claim 1 or 2, **characterised in that** it contains Cr = 2 - 4%.

4. Steel according to any one of claims 1 to 3, **characterised in that** it contains Al = 1 - 1.6%, preferably 1.4 - 1.6%.

5. Steel according to any one of claims 1 to 4, **characterised in that** it contains Mo ≥ 1%.

6. Steel according to any one of claims 1 to 5, **characterised in that** it contains Mo + W/2 = 1 - 2%.

7. Steel according to any one of claims 1 to 6, **characterised in that** it contains V = 0.2 - 0.3%.

8. Steel according to any one of claims 1 to 7, **characterised in that** it contains Nb = trace levels - 0.05%.

9. Steel according to any one of claims 1 to 8, **characterised in that** it contains Si = trace levels - 0.25%, preferably trace levels - 0.10%.

10. Steel according to any one of claims 1 to 9, **characterised in that** it contains Mn = trace levels - 0.25%, preferably trace levels - 0.10%.

11. Steel according to any one of claims 1 to 10, **characterised in that** it contains Ti = trace levels - 100 ppm.

12. Steel according to any one of claims 1 to 11, **characterised in that** it contains O = trace levels - 10 ppm.

13. Steel according to any one of claims 1 to 12, **characterised in that** it contains N = trace levels - 50 ppm, preferably trace levels - 10 ppm.

14. Steel according to any one of claims 1 to 13, **characterised in that** it contains S = trace levels - 10 ppm, preferably trace levels - 5 ppm.

15. Steel according to any one of claims 1 to 14, **characterised in that** it contains P = trace levels - 100 ppm.

16. Steel according to any one of claims 1 to 15, **characterised in that** the martensitic conversion temperature Ms thereof is greater than or equal to 140°C, with Ms = 550 - 350 x C% - 40 x Mn% - 17 x Cr% - 10 x Mo% - 17 x Ni% - 8 x W% - 35 x V% - 10 x Cu% - 10 x Co% + 30 x Al% °C.

17. Method for producing a component from steel, **characterised in that** it comprises the following steps prior to the finishing of the component which provides the component with its definitive shape:
- the preparation of a steel which has the composition according to any one of claims 1 to 16;
- the forging of this steel;
- a softening tempering operation at 600-675°C for from 4 to 20 hours followed by cooling in air;
- solution heat treatment at 900-1000°C for at least 1 hour, followed by cooling in oil or air which is sufficiently rapid to prevent the precipitation of intergranular carbides in the austenite matrix;
- a hardening ageing operation at 475-600°C, preferably from 490-525°C for from 5-20 h.

18. Method for producing a component from steel according to claim 17, **characterised in that** it further comprises a cryogenic processing operation at -50°C or lower, preferably at -80°C or lower, in order to convert all the austenite into martensite, the temperature being 200°C or more lower than Ms, at least one of the processing operations lasting at least 2 hours.

19. Method for producing a component from steel according to either claim 17 or claim 18, **characterised in that** it further comprises a processing operation for softening the martensite so obtained carried out at 150°C-250°C for from 4 - 16 hours, followed by cooling in still air.

20. Method for producing a component from steel according to any one of claims 17 to 19, **characterised in that** the component is also subject to a case-hardening or nitriding operation.

21. Mechanical component or structural element component, **characterised in that** it is produced in accordance with the method of any one of the claims 17 to 20.

22. Mechanical component according to claim 21, **characterised in that** it is an engine transmission shaft.

## Patentansprüche

1. Stahl,
**dadurch gekennzeichnet , dass** seine Zusammensetzung in Gewichtsprozent wie folgt lautet:
- C=0,18-0,30%
- Co = 5 - 7%
- Cr = 2 - 5%
- Al = 1 - 2%
- Mo + W/2 = 1 - 4%
- V = Spuren - 0,3 %
- Nb = Spuren - 0,1 %
- B = Spuren - 50 ppm
- Ni = 10,5 - 15% mit Ni ≥ 7 + 3,5 Al
- Si = Spuren - 0,4 %
- Mn = Spuren - 0,4 %
- Ca = Spuren - 500 ppm
- seltene Erden = Spuren - 500 ppm
- Ti = Spuren - 500 ppm
- O = Spuren - 200 ppm, wenn der Stahl durch Pulvermetallurgie erhalten wurde, oder Spuren - 50 ppm, wenn der Stahl durch Bearbeitung an der Luft oder unter Vakuum ausgehend von Flüssigmetall erhalten wurde,
- N = Spuren - 100 ppm
- S = Spuren - 50 ppm
- Cu = Spuren - 1%
- P = Spuren - 200 ppm
wobei der Rest aus Eisen und unvermeidlichen Verunreinigungen besteht, die aus der Bearbeitung resultieren.

2. Stahl nach Anspruch 1,
**dadurch gekennzeichnet, dass** er C = 0,20 - 0,25 % enthält.

3. Stahl nach Anspruch 1 oder 2,
**dadurch gekennzeichnet, dass** er Cr = 2 - 4 % enthält.

4. Stahl nach einem der Ansprüche 1 bis 3,
**dadurch gekennzeichnet, dass** er Al = 1 - 1,6 %, vorzugsweise 1,4 - 1,6 %, enthält.

5. Stahl nach einem der Ansprüche 1 bis 4,
**dadurch gekennzeichnet, dass** er Mo ≥ 1 % enthält.

6. Stahl nach einem der Ansprüche 1 bis 5,
**dadurch gekennzeichnet, dass** er Mo + W/2 = 1 - 2 % enthält.

7. Stahl nach einem der Ansprüche 1 bis 6,
**dadurch gekennzeichnet, dass** er V = 0,2 - 0,3 % enthält.

8. Stahl nach einem der Ansprüche 1 bis 7,
**dadurch gekennzeichnet, dass** er Nb = Spuren - 0,05 % enthält.

9. Stahl nach einem der Ansprüche 1 bis 8,
**dadurch gekennzeichnet , dass** er Si = Spuren - 0,25 %, vorzugsweise Spuren - 0,10 %, enthält.

10. Stahl nach einem der Ansprüche 1 bis 9,
**dadurch gekennzeichnet , dass** er Mn = Spuren - 0,25 %, vorzugsweise Spuren - 0,10 %, enthält.

11. Stahl nach einem der Ansprüche 1 bis 10,
**dadurch gekennzeichnet , dass** er Ti = Spuren - 100 ppm enthält.

12. Stahl nach einem der Ansprüche 1 bis 11,
**dadurch gekennzeichnet, dass** er O = Spuren - 10 ppm enthält.

13. Stahl nach einem der Ansprüche 1 bis 12,
**dadurch gekennzeichnet , dass** er N = Spuren - 50 ppm, vorzugsweise Spuren - 10 ppm, enthält.

14. Stahl nach einem der Ansprüche 1 bis 13,
**dadurch gekennzeichnet , dass** er S = Spuren - 10 ppm, vorzugsweise Spuren - 5 ppm, enthält.

15. Stahl nach einem der Ansprüche 1 bis 14,
**dadurch gekennzeichnet , dass** er P = Spuren - 100 ppm enthält.

16. Stahl nach einem der Ansprüche 1 bis 15,
**dadurch gekennzeichnet , dass** seine martensitische Umwandlungstemperatur Ms höher oder gleich 140°C ist , wobei Ms = 550 - 350 x C % - 40 x Mn % - 17 x Cr % - 10 x Mo % - 17 x Ni % - 8 x W% - 35 x V% - 10 x Cu% - 10 x Co % +30 x Al % °C.

17. Verfahren zum Herstellen einen Teils aus Stahl,
**dadurch gekennzeichnet , dass** es vor der Fertigstellung des Teils, bei der dieses seine endgültige Form erhält, die nachfolgenden Schritte umfasst:
- Bereitstellen eines Stahls mit der Zusammensetzung nach einem der Ansprüche 1 bis 16,
- Schmieden dieses Stahls,
- Weichglühen bei 600 - 675 °C für 4 bis 20 Stunden, gefolgt von einem Abkühlen an der Luft,
- Lösungsglühen bei 900 - 1000 °C für mindestens 1 Stunde, gefolgt von einem Abkühlen in Öl oder an der Luft, das rasch genug erfolgt, um die Karbidausscheidung an Korngrenzen in der Austenitmatrix zu vermeiden,
- Alterungsbehandlung durch Härtung bei 475 - 600 °C, vorzugsweise bei 490 - 525 °C für 5 - 20 Stunden.

18. Verfahren zum Herstellen eines Teils aus Stahl nach Anspruch 17,
**dadurch gekennzeichnet , dass** es ferner eine Tiefsttemperaturbehandlung bei -50 °C oder darunter, vorzugsweise bei -80 °C oder darunter, umfasst, um den gesamten Austenit in Martensit umzuwandeln, wobei die Temperatur um 200 °C oder mehr unter der von Ms liegt, wobei zumindest eine der Behandlungen mindestens 2 Stunden lang dauert.

19. Verfahren zum Herstellen eines Teils aus Stahl nach einem der Ansprüche 17 oder 18,
**dadurch gekennzeichnet , dass** es ferner eine Weichwärmebehandlung des roh gehärteten Martensits umfasst, die 4 - 16 Stunden lang bei 150 - 250 °C erfolgt, gefolgt von einer Abkühlung an ruhender Luft.

20. Verfahren zum Herstellen eines Teils aus Stahl nach einem der Ansprüche 17 bis 19,
**dadurch gekennzeichnet , dass** das Teil auch eine Aufkohlung oder eine Nitrierhärtung erfährt.

21. Mechanisches Teil oder Teil für ein Bauelement,
**dadurch gekennzeichnet , dass** es mit dem Verfahren nach einem der Ansprüche 17 bis 20 hergestellt ist.

22. Mechanisches Teil nach Anspruch 21,
**dadurch gekennzeichnet , dass** es sich um eine Motorgetriebewelle handelt.
